# EUROPEAN PATENT SPECIFICATION

(11) **EP 4 524 021 B1**
(45) Date of publication and mention of the grant of the patent: **10.12.2025**
(21) Application number: 24192875.3
(22) Date of filing: 05.08.2024
(51) Int. Cl.: B63B 49/00, B63B 79/40, G05D 1/225, G05D 1/2285, G05D 107/80, G05D 109/30, G08G 3/00, G05D 105/22

(54) **SYSTEM FOR CONTROLLING FERRY, METHOD OF CONTROLLING FERRY, AND FERRY**
SYSTEM ZUR STEUERUNG EINER FÄHRE, VERFAHREN ZUR STEUERUNG EINER FÄHRE UND FÄHRE
SYSTÈME DE COMMANDE DE FERRY, PROCÉDÉ DE COMMANDE DE FERRY ET FERRY

(30) Priority: 13.09.2023 JP 2023148322
(43) Date of publication of application: 19.03.2025
(73) Proprietor: Yamaha Hatsudoki Kabushiki Kaisha, Iwata-shi, Shizuoka 438-8501 (JP)
(72) Inventor: Inoue, Hiroshi, Iwata-shi, Shizuoka, 4388501 (JP)
(74) Representative: Grünecker Patent- und Rechtsanwälte PartG mbB

(56) References cited:
- AU-A1- 2017 243 430
- CA-A1- 3 152 109
- CN-A- 105 894 859
- JP-A- 2019 049 880

## Description

The present invention relates to a system for controlling a ferry, a method of controlling a ferry, and a ferry.

There has been conventionally disclosed a watercraft mooring management server for managing the use of a mooring at which watercraft are moored (see Japan Laid-open Patent Application Publication No. JP 2019-049880 A).

CN 105 894 859 A relates to a system wherein a vessel communicates with a port management server to request parking or departure, receiving trajectory and environmental data to enable manual, remote-controlled or autonomous docking and undocking operations based on ship-specific and situational parameters.

Incidentally, in a marina where one or more watercraft are moored and stored on water, a user is required to reach one's own watercraft moored and stored on water by a ferry handled by the marina Besides, when the marina is closed on holiday, the user is required to prepare a ferry for oneself.

It is an object of the present invention to enhance the usability of a ferry set afloat in a marina where one or more watercraft are moored and stored.

The invention is defined by the independent claims. The dependent claims describe advantageous embodiments.

A system for controlling a ferry according to an aspect is a system for controlling a ferry set afloat in a marina where a watercraft of a user is moored and stored. The system includes a controller and a storage portion. The storage portion stores identification information identifying the user, first position information regarding a first position where the ferry is docked/undocked, and second position information regarding a second position on water corresponding to a position in which the watercraft of the user is moored and stored. The controller allows driving of the ferry and sets the second position as a destination of the ferry based on the second position information when receiving the identification information.

In the system for controlling a ferry according to the present disclosure, the controller allows driving of the ferry based on the identification information identifying the user of the watercraft; hence, even when the marina is closed on holiday, the user is enabled to arrive at the watercraft of one's own moored and stored by using the ferry set afloat in the marina. Besides, the ferry can be prevented from being used by anyone other than the parties involved in the marina without permission. Furthermore, the controller sets the position, corresponding to the position in which the watercraft of the user is moored and stored, as the destination of the ferry; hence, the user is enabled to easily arrive at the watercraft of one's own moored and stored.

A method of controlling a ferry according to yet another aspect relates to a method of controlling a ferry set afloat in a marina where a watercraft of a user is moored and stored. The method includes the following: storing identification information identifying the user, first position information regarding a first position where the ferry is docked/undocked, second position information regarding a second position on water corresponding to a position in which the watercraft of the user is moored and stored; and allowing driving of the ferry and setting the second position as a destination of the ferry based on the second position information when the identification information is received.

A ferry according to still another aspect relates to a ferry set afloat in a marina where a watercraft of a user is moored and stored. The ferry includes a controller and a storage portion. The storage portion stores identification information identifying the user, first position information regarding a first position where the ferry is docked/undocked, second position information regarding a second position on water corresponding to a position in which the watercraft of the user is moored and stored. The controller allows driving of the ferry and sets the second position as a destination of the ferry based on the second position information when receiving the identification information.

Overall, according to the present invention, it is made possible to enhance the usability of a ferry set afloat in a marina where one or more watercraft are moored and stored.

### BRIEF DESCRIPTION OF THE DRAWINGS

FIG. 1 is a schematic diagram showing a ferry controlling system according to a preferred embodiment.
FIG. 2 is a schematic diagram of a marina according to the preferred embodiment.
FIG. 3 is a functional block diagram of the ferry controlling system.
FIG. 4 is a flowchart showing a form of processing executed by a controller.
FIG. 5 is a flowchart showing a form of processing executed by the controller.
FIG. 6 is a schematic diagram of a marina including piers.

### DETAILED DESCRIPTION OF EMBODIMENTS

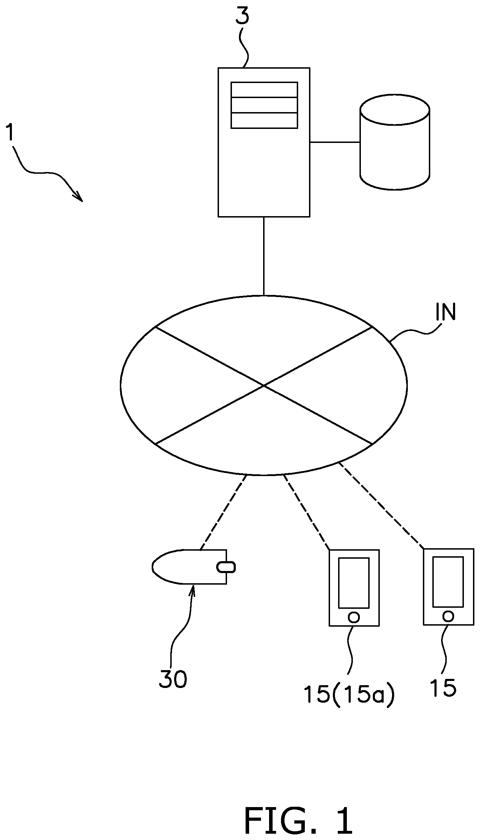

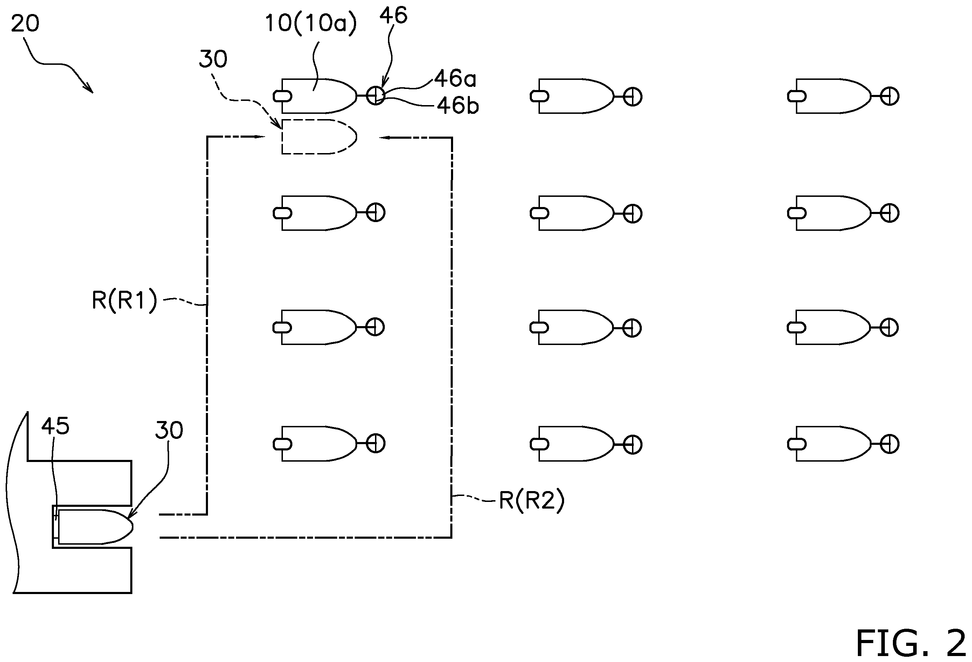

A preferred embodiment will be hereinafter explained with reference to drawings. As shown in FIGS. 1 and 2, a ferry controlling system 1 is a system for controlling a ferry set afloat in a marina 20 where a plurality of watercraft 10 of users are moored and stored. The marina 20 is a place where the plural watercraft 10 of users are moored and stored on water. For example, the situation "the plural watercraft 10 of users are moored and stored on water" herein means that the plural watercraft 10 of users are in positions on water, at which the users cannot arrive on foot from the land on which the marina 20 is located, by way of piers. In other words, the land on which the marina 20 is located and the plural watercraft 10 of users moored and stored on water are not physically contiguous. The ferry controlling system 1 uses a ferry 30 to transport a given user from the land where the marina 20 is located to the moored and stored user's watercraft 10 and from the moored and stored user's watercraft 10 to the land where the marina 20 is located by the ferry 30.

As shown in FIG. 2, the plural watercraft 10 are moored and stored away from each other at intervals in the marina 20. In FIG. 2, only one of the plural watercraft 10 is assigned with reference sign 10. In FIG. 2, the watercraft 10 of a first user is assigned with reference sign 10a.

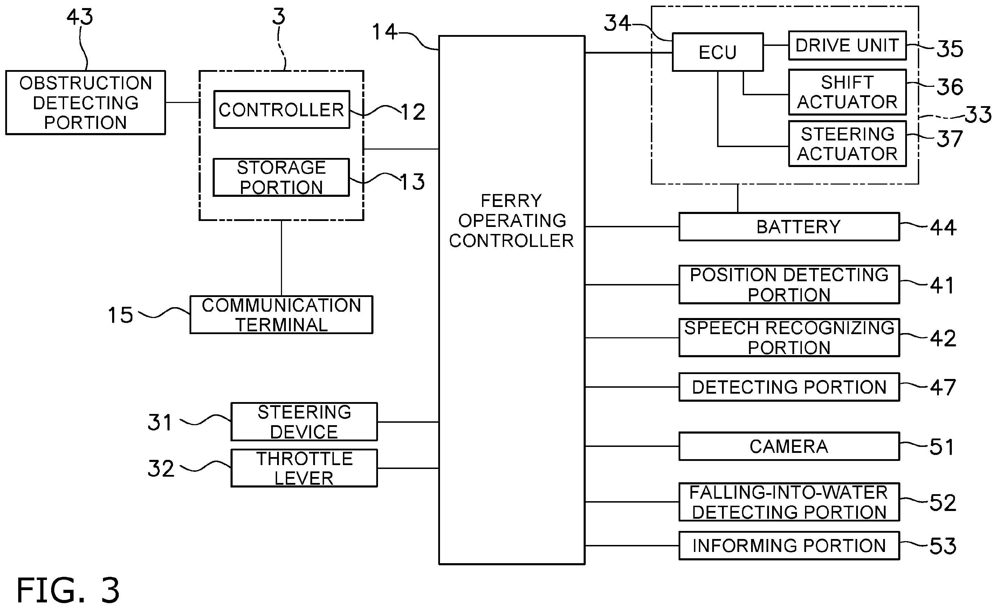

FIG. 3 is a functional block diagram of the ferry controlling system 1. The ferry 30 includes a steering device 31, a throttle lever 32, and a marine propulsion device 33. The steering device 31 is a device for operating a turning direction of the ferry 30. The throttle lever 32 is an operating member for regulating a thrust of the marine propulsion device 33 and switching a direction of the thrust between fore and aft directions.

The marine propulsion device 33 includes an ECU (Electric Control Unit) 34, a drive unit 35, a shift actuator 36, and a steering actuator 37.

The ECU 34 includes a processor such as a CPU (Central Processing Unit) and memories such as a RAM (Random Access Memory) and a ROM (Read Only Memory). The ECU 34 stores programs and data for controlling the marine propulsion device 33. The ECU 34 controls the drive unit 35. The drive unit 35 generates the thrust for propelling the ferry 30. The drive unit 35 includes an electric motor 35a for rotating a propeller (not shown in the drawings). The drive unit 35 may be an internal combustion engine.

The shift actuator 36 changes a rotational direction of the propeller rotated by the electric motor 35a in accordance with an operation performed for the throttle lever 32. The steering actuator 37 changes a rudder angle of the marine propulsion device 33 in accordance with an operation performed for the steering device 31.

The ferry controlling system 1 includes a server 3. The server 3 is used as, for instance, a computer for managing the ferry 30. The server 3 is hosted by, for instance, a company that manages and operates the marina 20. The server 3 is configured to be communicable, in a wireless manner, with one or more communication terminals 15 used by one or more of the users of the plural watercraft 10. In the present preferred embodiment, the server 3 is configured to be communicable with the one or more communication terminals 15 over the Internet IN. The server 3 is configured to be communicable with the one or more communication terminals 15 through, for instance, an application used for the ferry controlling system. The one or more communication terminals 15 are of one or more of the types such as a smartphone and a tablet. In the present preferred embodiment, the one or more communication terminals 15 are composed of a plurality of communication terminals 15. In FIG. 1, the communication terminal 15 used by the first user is assigned with reference sign 15a.

The server 3 includes a controller 12 and a storage portion 13. The controller 12 includes a processor such as a CPU and memories such as a RAM and a ROM.

The controller 12 controls a ferry operating controller 14 disposed in the ferry 30. The controller 12 controls the ferry 30 through the ferry operating controller 14. The ferry operating controller 14 is configured to be communicable with the controller 12. The ferry operating controller 14 includes a processor such as a CPU and memories such as a RAM and a ROM. The ferry operating controller 14 is programmed to control the ferry 30. The ferry operating controller 14 has stored programs and data for controlling the marine propulsion device 33. The ferry operating controller 14 is connected to the steering device 31, the throttle lever 32, and the marine propulsion device 33 through wired or wireless communications. The ferry operating controller 14 controls the shift actuator 36 and the steering actuator 37 through the ECU 34. The ferry operating controller 14 controls a rotational speed of the electric motor 35a in accordance with an operating amount of the throttle lever 32.

The storage portion 13 has stored a variety of information and a variety of programs. The storage portion 13 includes, for instance, one or more recording media such as an HDD (Hard Disk Drive) and/or an SSD (Solid State Drive). The storage portion 13 may be included in the controller 12 or the ferry operating controller 14. The storage portion 13 has stored identification information, first position information, and second position information. The identification information is composed of pieces of information for identifying the users of the plural watercraft 10 moored and stored in the marina 20. The pieces of information in the identification information are uniquely set in correspondence to the plural watercraft 10 moored and stored in the marina 20. For example, each piece of information in the identification information is a character string of alphabetical and numerical symbols expressed by a predetermined number of digits.

The first position information is a piece of positional information regarding a first position where the ferry 30 is docked/undocked. The ferry 30 is moored in the first position depicted with solid line in FIG. 2. The first position adjoins to the land on which the marina 20 is located.

The second position information is composed of pieces of information regarding second positions located on water in correspondence to positions in which the plural watercraft 10 of users are moored and stored. Each piece of information in the second position information includes information of a position of a buoy 46a (to be descried) for mooring the watercraft 10 of each user. The pieces of information in the second position information are associated with those in the identification information. In FIG. 2, the watercraft 10 of the first user is assigned with reference sign 10a.

The storage portion 13 has stored a plurality of routes R from the first position to the second position. As shown in FIG. 2, a first route R1 and a second route R2, for instance, are included in the plural routes R from the first position to the second position corresponding to the position in which the watercraft 10a is moored and stored.

The ferry controlling system 1 includes a position detecting portion 41, a speech recognizing portion 42, an obstruction detecting portion 43, a battery 44, a charging device 45, one or more mooring members 46, and a detecting portion 47.

The position detecting portion 41 is disposed in the ferry 30. For example, the position detecting portion 41 is a GPS receiving portion. The position detecting portion 41 obtains positional information of the ferry 30 from a GPS satellite. The position detecting portion 41 is connected to the ferry operating controller 14 in a communicable manner. The ferry operating controller 14 obtains a position of the ferry 30 based on a signal transmitted thereto from the position detecting portion 41.

The speech recognizing portion 42 is disposed in the ferry 30. For example, the speech recognizing portion 42 detects user voice obtained by a microphone and outputs a result of detection to the ferry operating controller 14.

The obstruction detecting portion 43 includes, for instance, a camera disposed in the marina 20. The camera is configured to take pictures of a storage region in which the plural watercraft 10 of users are moored and stored. The obstruction detecting portion 43 detects an obstruction on each of the plural routes R based on image data of pictures taken by the camera and outputs a result of detection to the controller 12. For example, when any watercraft other than the ferry 30 exists on any one of the plural routes R, the obstruction detecting portion 43 detects the watercraft as the obstruction.

The battery 44 is disposed in the ferry 30. The battery 44 supplies electricity to the ferry operating controller 14 and the marine propulsion device 33.

The charging device 45 is enabled to supply electricity to the battery 44 when the ferry 30 is in the first position. The charging device 45 enables charging of the battery 44 in a wireless manner. For example, the charging device 45 includes a non-contact charging pad. It should be noted that the charging device 45 may be configured to enable charging of the battery 44 in a wired manner.

Each of the one or more mooring members 46 is a member for mooring and storing the watercraft 10 of each user. In the present preferred embodiment, the one or more mooring members 46 are composed of a plurality of mooring members 46. The plural mooring members 46 are disposed away from each other at predetermined intervals. Each of the plural mooring members 46 includes the buoy 46a for mooring the watercraft 10 of each user and a connecting member 46b for connecting therethrough the buoy 46a to the watercraft 10 of each user. It should be noted that in FIG. 2, only one of the plural mooring members 46, by which the watercraft 10 of the first user is moored, is assigned with reference sign 46.

The buoy 46a is exposed out of the surface of water. In the present preferred embodiment, the buoy 46a floats on the surface of water. For example, the buoy 46a is connected to an anchor anchored to the bottom of a body of water and is fixed in position on water by the anchor.

The connecting member 46b is fixed to the buoy 46a. For example, the connecting member 46b is a metallic member made in shape of an annulus. The watercraft 10 of each user is moored in a predetermined position by fixing a rope or chain extending from the watercraft 10 of each user to the connecting member 46b. It should be noted that the connecting member 46b may be a rope fixed to the buoy 46a. In this case, the watercraft 10 of each user may be moored in the predetermined position by being fixed to the rope fixed to the buoy 46a.

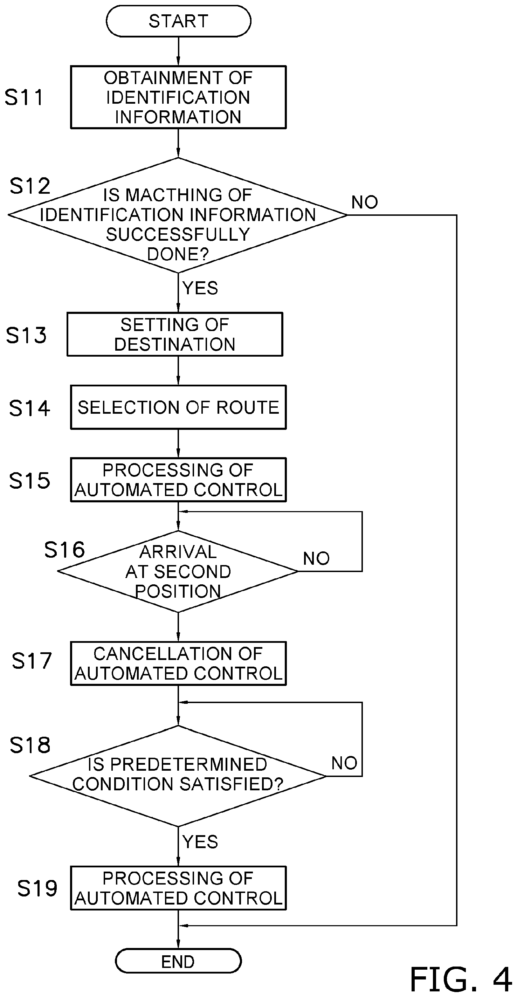

When the ferry 30 is in the first position, if receiving identification information in response to an input made through the communication terminal 15 of a given user (step S11 in FIG. 4), the controller 12 determines whether the received identification information is matched with any of the pieces of information in the identification information stored in the storage portion 13 (step S12 in FIG. 4). When determining that matching is successfully done for the received identification information, the controller 12 controls the ferry operating controller 14 to allow driving of the ferry 30 and sets the second position as a destination of the ferry 30 based on one of the pieces of information in the second position information that is associated with the received identification information (step S13 in FIG. 4).

For example, the controller 12 receives the identification information of the first user in response to an input made through the communication terminal 15a of the first user. When determining that matching is successfully done for the identification information of the first user, the controller 12 controls the ferry operating controller 14 to allow driving of the ferry 30 and sets, as the destination of the ferry 30, the second position (located in the vicinity of a position schematically depicted with dashed dotted line in FIG. 2) corresponding to the position in which the watercraft 10a of the first user is moored and stored.

When receiving the identification information, the controller 12 selects one of the plural routes R based on the result of detection by the obstruction detecting portion 43 (step S14 in FIG. 4). For example, based on the result of detection by the obstruction detecting portion 43, the controller 12 calculates a length of time estimated for arrival at the destination (herein referring to the second position) in each of the plural routes R and then selects one of the plural routes R such that the length of time estimated for arrival at the destination is made shortest.

It should be noted that in a situation to allow driving of the ferry 30, the controller 12 preferably allows driving of the ferry 30 and sets the second position as the destination of the ferry 30 when receiving terminal position information from the communication terminal 15 of the given user and then determining that the communication terminal 15 is in, or in the vicinity of, the first position. On the other hand, when the ferry 30 is not in the first position, if receiving identification information in response to an input made through the communication terminal 15 of the given user, chances are high that the ferry 30 is being used by another user; hence, the controller 12 gives a priority to execute an automated control that is currently being executed.

After setting the second position as the destination of the ferry 30, the controller 12 executes an automated control to automatically move the ferry 30 from the first position to the second position (step S15 in FIG. 4). The automated control is executed for the ferry 30 through the ferry operating controller 14. The controller 12 executes the automated control to automatically move the ferry 30 from the first position to the second position, for instance, in response to an operation performed for an operating portion such as one or more buttons installed in the ferry 30. For example, the controller 12 outputs, to the communication terminal 15, a destination that has been set, a route for arriving at the destination, a length of time estimated for arrival at the destination, and so forth. The controller 12 may be configured to cause a display 38 installed in the ferry 30 to display the destination that has been set, the route for arriving at the destination, the length of time estimated for arrival at the destination, and so forth.

While executing the automated control for the ferry 30, the controller 12 may light up a lamp disposed in the ferry 30 to externally inform of executing the automated control.

When allowing driving of the ferry 30, the controller 12 may issue an alert to urge each person on board the ferry 30 to wear a life jacket. The controller 12 may cause the display 38 to display the alert to urge each person on board the ferry 30 to wear the life jacket. After receiving a response to the alert regarding wearing the life jacket from the given user on board the ferry 30 through, for instance, the operating portion, the controller 12 may execute the automated control. The controller 12 may issue the alert regarding wearing the life jacket on a voice basis.

The controller 12 determines whether the ferry 30 has been moved from the first position to the second position based on a result of detection by the position detecting portion 41 (step S16 in FIG. 4). When determining that the ferry 30 has been moved from the first position to the second position, the controller 12 switches the automated control executed by the ferry operating controller 14 into a manual control (step S17 in FIG. 4). Accordingly, the given user on board the ferry 30 is enabled to bring the ferry 30 close to a boarding portion of the watercraft 10 of the given user by manually operating the steering device 31 in the ferry 30.

After moving the ferry 30 from the first position to the second position, the controller 12 determines whether a predetermined condition is satisfied (step S18 in FIG. 4). When determining that the predetermined condition is satisfied, the controller 12 sets the first position as the destination of the ferry 30 based on the first position information and executes an automated control to automatically move the ferry 30 to the first position (step S19 in FIG. 4). At this time, for instance, based on the result of detection by the obstruction detecting portion 43, the controller 12 may calculate a length of time estimated for arrival at the first position in each of the plural routes R and select one of the plural routes R such that the length of time estimated for arrival at the first position is made shortest.

After moving the ferry 30 from the first position to the second position, the controller 12 determines whether the predetermined condition is satisfied based on a notification transmitted thereto from the communication terminal 15 of the given user, the result of detection by the position detecting portion 41, the result of detection by the speech recognizing portion 42, or a result of detection by the detecting portion 47.

When receiving a predetermined notification from the communication terminal 15 of the given user, the controller 12 determines that the predetermined condition is satisfied. For example, the controller 12 executes the automated control to automatically move the ferry 30 to the first position when receiving a notification regarding completion of boarding of the first user on the watercraft 10a, from the communication terminal 15 of the first user through the application.

The controller 12 determines whether the ferry 30 is remote from the second position by a predetermined distance or greater based on the result of detection by the position detecting portion 41. When determining that the ferry 30 is remote from the second position by the predetermined distance or greater, the controller 12 determines that the predetermined condition is satisfied. For example, after the first user is on board the watercraft 10a, if the ferry 30 is kicked by the first user and is thereby moved away from the second position, it is made possible to execute the automated control to automatically move the ferry 30 to the first position. It should be noted that, under the condition, chances are that the automated control is unintentionally executed to automatically move the ferry 30 to the first position when the ferry 30 is moved away from the second position by the impact of wind and/or so forth. Because of this, the controller 12 may not be necessarily configured to determine whether the predetermined condition is satisfied based on the result of detection by the position detecting portion 41.

The controller 12 determines whether boarding of the first user on the watercraft 10a has been completed based on the result of detection by the speech recognizing portion 42. For example, the controller 12 determines that the predetermined condition is satisfied when the speech recognizing portion 42 recognizes a speech such as "boarding completed".

The detecting portion 47 is, for instance, a detecting sensor disposed in the buoy 46a. The detecting portion 47 detects movement of the watercraft 10a away from the second position. The detecting portion 47 detects separation of the connecting member 46b from the watercraft 10a. For example, the detecting portion 47 detects that the rope or chain, extending from the watercraft 10a of the first user to be fixed to the connecting member 46b, has been unfixed therefrom. For example, the detecting portion 47 outputs the result of detection to the controller 12 through the ferry operating controller 14. The controller 12 determines that the predetermined condition is satisfied when the detecting portion 47 detects separation of the connecting member 46b from the watercraft 10a.

The ferry controlling system 1 includes a camera 51, a falling-into-water detecting portion 52, and an informing portion 53. The camera 51 take pictures of the ferry 30 to generate image data. The camera 51 is disposed in the ferry 30. The camera 51 take pictures of fore, aft, port, and starboard sides of the ferry 30. The falling-into-water detecting portion 52 detects falling of a person on board the ferry 30 into water based on the image data generated by the camera 51. The controller 12 determines whether a person on board has fallen into water based on the result of detection by the falling-into-water detecting portion 52.

When the falling-into-water detecting portion 52 detects falling of a person on board into water, the controller 12 externally issues an alert through the informing portion 53. The informing portion 53 includes a loudspeaker disposed in the ferry 30. The informing portion 53 externally outputs an informing sound through the loudspeaker. When the falling-into-water detecting portion 52 detects falling of a person on board into water, the controller 12 informs a company that manages and operates the marina 20, for instance, of falling into water of the person on board. When the falling-into-water detecting portion 52 detects falling of a person on board into water, the controller 12 may cancel the automated control for the ferry 30.

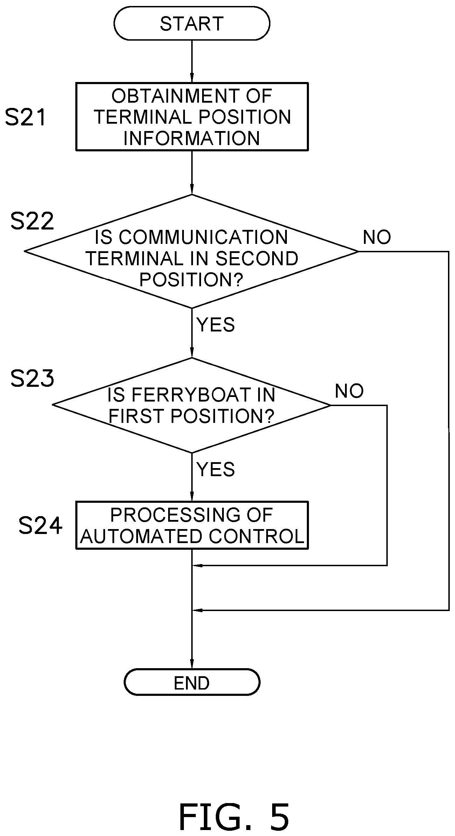

The given user of the watercraft 10 is enabled to summon the ferry 30 to the second position with the communication terminal 15 of one's own. The given user outputs the terminal position information of the communication terminal 15 of one's own to the controller 12 by the application. When receiving the terminal position information from the communication terminal 15 of the given user (step S21 in FIG. 5), the controller 12 determines whether the communication terminal 15 is in the second position based on the terminal position information of the communication terminal 15 (step S22 in FIG. 5). When determining that the communication terminal 15 of the given user is in the second position, the controller 12 determines whether the ferry 30 is in the first position (step S23 in FIG. 5). When determining that the ferry 30 is in the first position, the controller 12 sets the second position as the destination of the ferry 30 based on the second position information and executes the automated control to automatically move the ferry 30 from the first position to the second position (step S24 in FIG. 5). At this time, the controller 12 selects one of the plural routes R based on the result of detection by the obstruction detecting portion 43.

When determining that the communication terminal 15 of the given user is in the second position based on the terminal position information, the controller 12 outputs, to the communication terminal 15, information regarding a length of time required for the ferry 30 to arrive at the second position. For example, the given user is enabled to check the arrival time of the ferry 30 through the application.

When determining that the communication terminal 15 of the given user is in the second position based on the terminal position information, the controller 12 outputs present position information of the ferry 30 and destination information of the ferry 30 to the communication terminal 15. For example, the given user is enabled to check the present position information of the ferry 30 and the destination information of the ferry 30 through the application.

It should be noted that, when determining that the ferry 30 is not in the first position, the controller 12 may execute the automated control to automatically move the ferry 30 from the first position to the second position after finishing executing the automated control that is currently being executed.

After the ferry 30 is moved from the first position to the second position, the controller 12 executes the automated control to automatically move the ferry 30 from the second position to the first position in response to an operation performed for the operating portion such as one or more buttons installed in the ferry 30.

In the ferry controlling system 1 described above, the controller 12 allows driving of the ferry 30 based on the identification information for identifying users of the plural watercraft 10; hence, even when the marina 20 is closed on holiday, a given user is enabled to arrive at the watercraft 10 of one's own moored and stored on water by using the ferry 30 set afloat in the marina 20. Besides, the ferry 30 can be prevented from being used by anyone other than the parties involved in the marina 20 without permission. Furthermore, the controller 12 sets, as the destination of the ferry 30, a position corresponding to the position in which the watercraft 10 of the given user is moored and stored on water; hence, the given user is enabled to easily arrive at the watercraft 10 of one's own moored and stored on water.

Moreover, the controller 12 executes the automated control to automatically move the ferry 30 to the destination; hence, a given user can be prevented from mistakenly arriving at the watercraft of any other user moored and stored in the marina 20. Furthermore, a given user can be prevented from boarding the watercraft of any other user without permission.

### <Other Preferred Embodiments>

In the preferred embodiment described above, the drive unit 35 of the marine propulsion device 33 causes the electric motor 35a to rotate the propeller. Alternatively, the drive unit 35 of the marine propulsion device 33 may be made in form of an internal combustion engine or a hybrid system of an internal combustion engine and an electric motor. A plurality of marine propulsion devices 33 may be provided. The server 3 may be disposed in the ferry 30.

In the preferred embodiment described above, the automated control is configured to be executed for automatically moving the ferry 30. However, the automated control may be configured to move the ferry 30 from the first position to the second position or vice versa by a manual operation of a given user.

In the preferred embodiment described above, the ferry controlling system 1 is employed in the marina 20 where the plural watercraft 10 of users are moored and stored. However, the ferry controlling system 1 may not be limited to be applied to the ferry set afloat in the marina 20 and may be applied to a ferry that transports a given user to the watercraft of one's own moored and stored in a specified position on water.

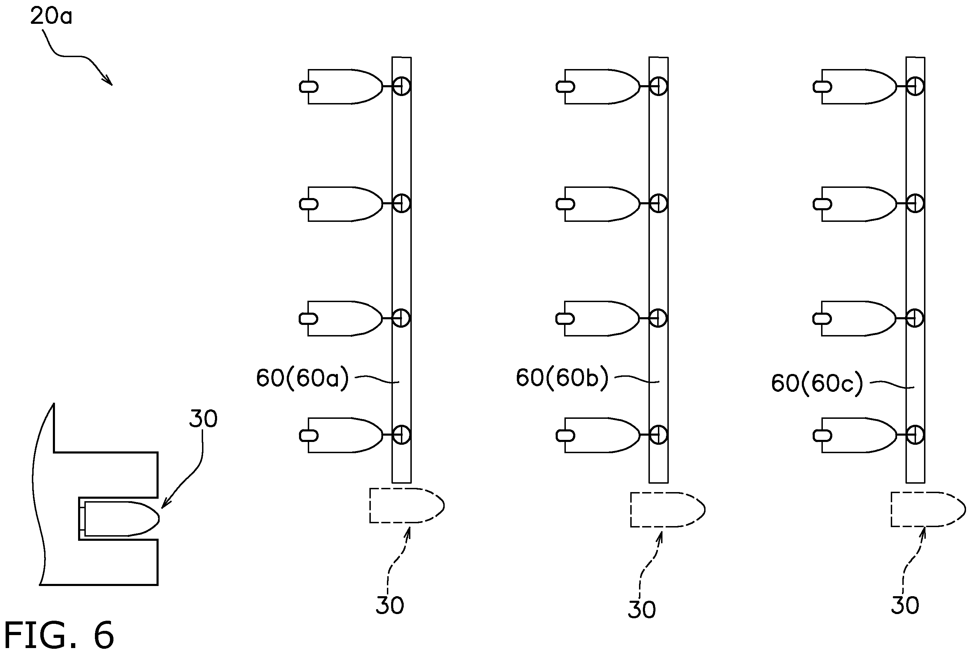

As shown in FIG. 6, a marina 20 may include one or more piers 60. The ferry controlling system may be employed in the marina 20a provided with the one or more piers 60 floating on water. The plural watercraft 10 of users may be moored and stored at the one or more piers 60. In this case, the one or more piers 60 are remote from the land on which the marina 20 is located; hence, the users cannot arrive at the watercraft 10 of one's own on foot via the one or more piers 60.

In the example shown in FIG. 6, the one or more piers 60 are composed of a plurality of piers 60a to 60c. Two or more of the plural watercraft 10 are moored and stored at each of the plural piers 60a to 60c. The storage portion 13 has stored pier position information composed of pieces of information regarding docking positions of the ferry 30 set for the plural piers 60a to 60c, respectively. In other words, a piece of information in the second position information regarding the second position on water (corresponding to the position in which the watercraft 10 of a given user is moored and stored) corresponds to that in the pier position information regarding a pier at which the watercraft 10 of the given user is moored and stored. The pieces of information in the pier position information are associated with those in the identification information.

### REFERENCE SIGNS LIST

10: Watercraft, 12: Controller, 13: Storage portion, 15: Communication terminal, 41: Position detecting portion, 42: Speech recognizing portion, 43: Obstruction detecting portion, 44: Battery, 45: Charging device, 46: Mooring member, 46a: Buoy, 46b: Connecting member, 47: Detecting portion, 51: Camera, 52: Falling-into-water detecting portion, 53: Informing portion

## Claims

1. A system for controlling a ferry (30) set afloat in a marina where a watercraft (10) of a user is moored and stored, the system comprising:
a controller (12); and
a storage portion (13) configured to store first position information regarding a first position where the ferry (30) is docked/undocked, and second position information regarding a second position on water, wherein
the controller (12) is configured or programmed to allow driving of the ferry (30) and set the second position as a destination of the ferry (30);
**characterized in that**
the storage portion (13) is configured to store identification information identifying the user;
the second position corresponds to a position in which the watercraft (10) of the user is moored and stored; and
the controller (12) is configured or programmed to allow driving of the ferry (30) and set the second position based on the second position information when receiving the identification information.

2. The system according to claim 1, wherein the controller (12) is further configured or programmed to execute an automated control to automatically move the ferry (30) from the first position to the second position after setting the second position as the destination of the ferry (30).

3. The system according to claim 2, wherein the controller (12) is further configured or programmed to:
determine whether a predetermined condition is satisfied after moving the ferry (30) from the first position to the second position; and
set the first position as the destination of the ferry (30) based on the first position information and execute the automated control to automatically move the ferry (30) to the first position when determining that the predetermined condition is satisfied.

4. The system according to claim 3, wherein the controller (12) is further configured or programmed to determine that the predetermined condition is satisfied when receiving a predetermined notification from a communication terminal (15) used by the user.

5. The system according to claim 3, further comprising:
a position detecting portion (41) configured to detect positional information of the ferry (30), wherein the controller (12) is further configured or programmed to:
determine whether the ferry (30) is remote from the second position by a predetermined distance or greater based on a result of detection by the position detecting portion (41); and
determine that the predetermined condition is satisfied when determining that the ferry (30) is remote from the second position by the predetermined distance or greater.

6. The system according to claim 3, further comprising:
a speech recognizing portion (42) configured to recognize a speech uttered by the user, wherein
the controller (12) is further configured or programmed to determine whether the predetermined condition is satisfied based on a result of detection by the speech recognizing portion (42).

7. The system according to claim 1, further comprising:
a detecting portion (47) configured to detect a leaving of the watercraft (10) from the second position, wherein the controller (12) is further configured or programmed to set the first position as the destination of the ferry (30) based on the first position information and execute an automated control to automatically move the ferry (30) to the first position when determining that the watercraft (10) is away from the second position based on a result of detection by the detecting portion (47) while the ferry (30) is in the second position.

8. The system according to claim 7, further comprising:
a mooring member (46) including a buoy (46a) and a connecting member (46b), the buoy (46a) being configured to moor the watercraft (10), the connecting member (46b) being conjured to connect the buoy (46a) to the watercraft (10) therethrough, wherein
the detecting portion (47) is further configured to detect separation of the connecting member (46b) from the watercraft (10), and
the controller (12) is further configured or programmed to determine that the watercraft (10) is away from the second position when the detecting portion (47) detects the separation of the connecting member (46b) from the watercraft (10).

9. The system according to any of claims 1 to 8, further comprising:
a camera (51) configured to generate image data by taking a picture of the ferry (30);
a falling-into-water detecting portion (52) configured to detect falling of a person on board the ferry (30) into water based on the image data generated by the camera (51); and
an informing portion (53) configured to externally inform of an alert when the falling-into-water detecting portion (52) detects the falling of the person on board the ferry (30) into water.

10. The system according to claim 2, further comprising:
a position detecting portion (41) configured to detect positional information of the ferry (30), wherein the controller (12) is further configured or programmed to:
determine whether the ferry (30) has been moved from the first position to the second position based on a result of detection by the position detecting portion (41); and
switch the automated control into a manual control when determining that the ferry (30) has been moved from the first position to the second position.

11. The system according to any of claims 1 to 10, wherein the second position information includes positional information of a buoy (46b) mooring the watercraft (10) of the user.

12. The system according to any of claims 1 to 11, further comprising:
an obstruction detecting portion (43), wherein
the storage portion (13) is configured to store a plurality of routes (R) from the first position to the second position,
the obstruction detecting portion (43) is configured to detect an obstruction on each of the plurality of routes (R), and
the controller (12) is further configured or programmed to select one of the plurality of routes (R) based on a result of detection by the obstruction detecting portion (43) when receiving the identification information.

13. The system according to any of claims 1 to 12, wherein the controller (12) is further configured or programmed to:
determine whether a communication terminal (15) used by the user is in the second position based on terminal position information of the communication terminal (15) when receiving the terminal position information from the communication terminal (15); and
set the second position as the destination of the ferry (30) based on the second position information and execute the automated control to automatically move the ferry (30) from the first position to the second position when determining that the communication terminal (15) is in the second position.

14. The system according to claim 13, wherein the controller (12) is further configured or programmed to output information regarding a length of time required for the ferry (30) to arrive at the second position to the communication terminal (15) when determining that the communication terminal (15) is in the second position based on the terminal position information.

15. The system according to claim 13, wherein the controller (12) is further configured or programmed to output present position information of the ferry (30) and destination information of the ferry (30) to the communication terminal (15) when determining that the communication terminal (15) is in the second position based on the terminal position information.

16. The system according to any of claims 1 to 15, further comprising:
a battery (44) disposed in the ferry (30); and
a charging device (45) enabled to supply electricity to the battery (44) when the ferry (30) is in the first position.

17. A method of controlling a ferry (30) set afloat in a marina where a watercraft (10) of a user is moored and stored, the method comprising:
storing identification first position information regarding a first position where the ferry (30) is docked/undocked, and second position information regarding a second position on water; and
allowing driving of the ferry (30) and setting the second position as a destination of the ferry (30);
**characterized in that**
the method comprises storing information identifying the user;
the second position corresponds to a position in which the watercraft (10) of the user is moored and stored; and
the driving of the ferry (30) is allowed and the second position is set based on the second position information when the identification information is received.

18. The method according to claim 17, further comprising:
executing an automated control to automatically move the ferry (30) from the first position to the second position after setting the second position as the destination of the ferry (30).

19. A ferry (30) set afloat in a marina where a watercraft (10) of a user is moored and stored, the ferry (30) comprising a system for controlling it according to claim 1.

20. The ferry (30) according to claim 19, wherein the controller (12) is further configured or programmed to execute an automated control to automatically move the ferry (30) from the first position to the second position after setting the second position as the destination of the ferry (30).

## Patentansprüche

1. System zur Steuerung einer Fähre (30), die in einer Marina zu Wasser gelassen ist, wo ein Wasserfahrzeug (10) eines Nutzers festgemacht und gelagert ist, wobei das System, umfasst:
eine Steuerung (12); und
einen Speicherabschnitt (13), der eingerichtet ist, erste Positionsinformation bezüglich einer ersten Position, wo die Fähre (30) angedockt/abgedockt wird, und zweite Positionsinformation bezüglich einer zweiten Position auf Wasser zu speichern, wobei
die Steuerung (12) eingerichtet oder programmiert ist, Fahren der Fähre (30) zu erlauben und die zweite Position als ein Ziel der Fähre (30) einzustellen;
**dadurch gekennzeichnet, dass**
der Speicherabschnitt (13) eingerichtet ist, Identifikationsinformation, die den Nutzer identifiziert, zu speichern;
die zweite Position einer Position entspricht, an der das Wasserfahrzeug (10) des Nutzers festgemacht und gelagert ist; und
die Steuerung (12) eingerichtet oder programmiert ist, Fahren der Fähre (30) zu erlauben und die zweite Position einzustellen, auf Grundlage der zweiten Positionsinformation, wenn die Identifikationsinformation empfangen wird.

2. System nach Anspruch 1, wobei die Steuerung (12) ferner eingerichtet oder programmiert ist, eine automatische Steuerung auszuführen, um die Fähre (30) automatisch von der ersten Position zu der zweiten Position zu bewegen, nachdem die zweite Position als das Ziel der Fähre (30) eingestellt wurde.

3. System nach Anspruch 2, wobei die Steuerung (12) ferner eingerichtet oder programmiert ist zum:
Bestimmen, ob eine vorbestimmte Bedingung erfüllt ist, nachdem die Fähre (30) von der ersten Position zu der zweiten Position bewegt wurde; und
Einstellen der ersten Position als das Ziel der Fähre (30) auf Grundlage der ersten Positionsinformation und Ausführen der automatischen Steuerung, um die Fähre (30) automatisch zu der ersten Position zu bewegen, wenn bestimmt wird, dass die vorbestimmte Bedingung erfüllt ist.

4. System nach Anspruch 3, wobei die Steuerung (12) ferner eingerichtet oder programmiert ist, zu bestimmen, dass die vorbestimmte Bedingung erfüllt ist, wenn eine vorbestimmte Benachrichtigung von einem Kommunikationsendgerät (15), das von dem Nutzer verwendet wird, empfangen wird.

5. System nach Anspruch 3, ferner umfassend:
einen Positionserkennungsabschnitt (41), der eingerichtet ist, Positionsinformation der Fähre (30) zu erkennen, wobei die Steuerung (12) ferner eingerichtet oder programmiert ist zum:
Bestimmen, ob die Fähre (30) von der zweiten Position einen vorbestimmten Abstand oder mehr entfernt ist, auf Grundlage eines Erkennungsergebnisses des Positionserkennungsabschnitts (41); und
Bestimmen, dass die vorbestimmte Bedingung erfüllt ist, wenn bestimmt wird, dass die Fähre (30) von der zweiten Position den vorbestimmten Abstand oder mehr entfernt ist.

6. System nach Anspruch 3, ferner umfassend:
einen Sprecherkennungsabschnitt (42), der eingerichtet ist, eine vom Nutzer geäußerte Sprache zu erkennen, wobei
die Steuerung (12) ferner eingerichtet oder programmiert ist, zu bestimmen, ob die vorbestimmte Bedingung erfüllt ist, auf Grundlage eines Erkennungsergebnisses des Spracherkennungsabschnitts (42).

7. System nach Anspruch 1, ferner umfassend:
einen Erkennungsabschnitt (47), der eingerichtet ist, ein Verlassen des Wasserfahrzeugs (10) der zweiten Position zu erkennen, wobei die Steuerung (12) ferner eingerichtet oder programmiert ist, die erste Position als das Ziel der Fähre (30) einzustellen, auf Grundlage der ersten Positionsinformation, und eine automatische Steuerung auszuführen, um die Fähre (30) zu der ersten Position zu bewegen, wenn bestimmt wird, dass das Wasserfahrzeug (10) von der zweiten Position entfernt ist, auf Grundlage eines Erkennungsergebnisses des Erkennungsabschnitts (47), während die Fähre (30) sich an der zweiten Position befindet.

8. System nach Anspruch 7, ferner umfassend:
ein Festmachelement (46), das ein Boje (46a) und ein Verbindungselement (46b) enthält, wobei die Boje (46a) eingerichtet ist, das Wasserfahrzeug (10) festzumachen, das Verbindungselement (46b) beschworen ist, die Boje (46a) mit dem Wasserfahrzeug (10) dadurch zu verbinden, wobei
der Erkennungsabschnitt (47) ferner eingerichtet ist, Trennung des Verbindungselements (46b) von dem Wasserfahrzeug (10) zu erkennen, und
die Steuerung (12) ferner eingerichtet oder programmiert ist, zu bestimmen, dass das Wasserfahrzeug (10) von der zweiten Position entfernt ist, wenn der Erkennungsabschnitt (47) die Trennung des Verbindungselements (46a) von dem Wasserfahrzeug (10) erkennt.

9. System nach einem der Ansprüche 1 bis 8, ferner umfassend:
eine Kamera (51), die eingerichtet ist, Bilddaten zu erzeugen, indem ein Bild der Fähre (30) aufgenommen wird;
einen Ins-Wasser-Fallen-Erkennungsabschnitt (52), der eingerichtet ist, Fallen einer Person an Bord der Fähre (30) in Wasser zu erkennen, auf Grundlage der von der Kamera (51) erzeugten Bilddaten; und
einen Informierabschnitt (53), der eingerichtet ist, über einen Alarm nach außen zu informieren, wenn der Ins-Wasser-Fallen-Erkennungsabschnitt (52) das Fallen der Person an Bord der Fähre (30) ins Wasser erkennt.

10. System nach Anspruch 2, ferner umfassend:
einen Positionserkennungsabschnitt (41), der eingerichtet ist, Positionsinformation der Fähre (30) zu erkennen, wobei die Steuerung (12) ferner eingerichtet oder programmiert ist zum:
Bestimmen, ob die Fähre (30) von der ersten Position zu der zweiten Position bewegt wurde, auf Grundlage eines Erkennungsergebnisses des Positionserkennungsabschnitts (41); und
Umschalten der automatischen Steuerung in eine manuelle Steuerung, wenn bestimmt wird, dass die Fähre (30) von der ersten Position zu der zweiten Position bewegt wurde.

11. System nach einem der Ansprüche 1 bis 10, wobei die zweite Positionsinformation Positionsinformation einer Boje (46b), die das Wasserfahrzeug (10) des Nutzers festmacht, enthält.

12. System nach einem der Ansprüche 1 bis 11, ferner umfassend:
einen Hinderniserkennungsabschnitt (43), wobei
der Speicherabschnitt (13) eingerichtet ist, eine Mehrzahl an Routen (R) von der ersten Position zu der zweiten Position zu speichern,
der Hinderniserkennungsabschnitt (43) eingerichtet ist, ein Hindernis auf jeder der Mehrzahl an Routen (R) zu erkennen, und
die Steuerung (12) ferner eingerichtet oder programmiert ist, eine der Mehrzahl an Routen (R) zu wählen, auf Grundlage eines Erkennungsergebnisses des Hinderniserkennungsabschnitts (43), wenn die Identifikationsinformation empfangen wird.

13. System nach einem der Ansprüche 1 bis 12, wobei die Steuerung (12) ferner eingerichtet oder programmiert ist zum:
Bestimmen, ob ein Kommunikationsendgerät (15), das von dem Nutzer verwendet wird, sich an der zweiten Position befindet, auf Grundlage von Endgerätepositionsinformation des Kommunikationsendgeräts (15), wenn die Endgerätepositionsinformation von dem Kommunikationsendgerät (15) empfangen wird; und
Einstellen der zweiten Position als das Ziel der Fähre (30), auf Grundlage der zweiten Positionsinformation, und Ausführen der automatischen Steuerung, um die Fähre (30) automatisch von der ersten Position zu der zweiten Position zu bewegen, wenn bestimmt wird, dass das Kommunikationsendgerät (15) sich an der zweiten Position befindet.

14. System nach Anspruch 13, wobei die Steuerung (12) ferner eingerichtet oder programmiert ist, Information bezüglich einer Zeitdauer, die von der Fähre (30) benötigt wird, um an der zweiten Position anzukommen, an das Kommunikationsendgerät (15) auszugeben, wenn bestimmt wird, dass das Kommunikationsendgerät (15) sich an der zweiten Position befindet, auf Grundlage der Endgerätepositionsinformation.

15. System nach Anspruch 13, wobei die Steuerung (12) ferner eingerichtet oder programmiert ist, derzeitige Positionsinformation der Fähre (30) und Zielinformation der Fähre (30) an das Kommunikationsendgerät (15) auszugeben, wenn bestimmt wird, dass das Kommunikationsendgerät (15) sich an der zweiten Position befindet, auf Grundlage der Endgerätepositionsinformation.

16. System nach einem der Ansprüche 1 bis 15, ferner umfassend:
eine Batterie (44), die in der Fähre (30) angeordnet ist; und
eine Ladevorrichtung (45), die befähigt ist, Elektrizität an die Batterie (44) zu liefern, wenn die Fähre (30) sich an der ersten Position befindet.

17. Verfahren zur Steuerung einer Fähre (30), die in einer Marina zu Wasser gelassen ist, wo ein Wasserfahrzeug (10) eines Nutzers festgemacht und gelagert ist, wobei das Verfahren umfasst:
Speichern von erster Positionsidentifikationsinformation bezüglich einer ersten Position, wo die Fähre (30) angedockt/abgedockt wird, und zweiter Positionsinformation bezüglich einer zweiten Position auf Wasser; und
Erlauben von Fahren der Fähre (30) und Einstellen der zweiten Position als ein Ziel der Fähre (30);
**dadurch gekennzeichnet, dass**
das Verfahren Speichern von Identifikationsinformation, die den Nutzer identifiziert, umfasst;
die zweite Position einer Position entspricht, an der das Wasserfahrzeug (10) des Nutzers festgemacht und gelagert ist; und
das Fahren der Fähre (30) erlaubt wird und die zweite Position eingestellt wird, auf Grundlage der zweiten Positionsinformation, wenn die Identifikationsinformation empfangen wird.

18. Verfahren nach Anspruch 17, ferner umfassend:
Ausführen einer automatischen Steuerung, um die Fähre (30) automatisch von der ersten Position zu der zweiten Position zu bewegen, nachdem die zweite Position als das Ziel der Fähre (30) eingestellt wurde.

19. Fähre (30), die in einer Marina zu Wasser gelassen ist, wo ein Wasserfahrzeug (10) eines Nutzers festgemacht und gelagert ist, wobei die Fähre (30) ein System zu ihrer Steuerung nach Anspruch 1 umfasst.

20. Fähre nach Anspruch 19, wobei die Steuerung (12) ferner eingerichtet oder programmiert ist, eine automatische Steuerung auszuführen, um die Fähre (30) automatisch von der ersten Position zu der zweiten Position zu bewegen, nachdem die zweite Position als das Ziel der Fähre (30) eingestellt wurde.

## Revendications

1. Système de commande de ferry (30) mis à flot dans une marina où l'embarcation (10) d'un utilisateur est amarrée et entreposée, le système comprenant:
un dispositif de commande (12) ; et
une partie stockage (13) configurée pour stocker des informations de première position concernant une première position où le ferry (30) est amarré/ désamarré, et des informations de seconde position concernant une seconde position sur l'eau, dans lequel
le dispositif de commande (12) est configuré ou programmé pour permettre la conduite du ferry (30) et définir la seconde position comme destination du ferry (30);
**caractérisé en ce que**
la partie stockage (13) est configurée pour stocker des informations d'identification permettant d'identifier l'utilisateur;
la seconde position correspond à une position dans laquelle l'embarcation (10) de l'utilisateur est amarrée et entreposée; et
le dispositif de commande (12) est configuré ou programmé pour permettre la conduite du ferry (30) et définir la seconde position sur la base des informations de seconde position lors de la réception des informations d'identification.

2. Système selon la revendication 1, dans lequel le dispositif de commande (12) est en outre configuré ou programmé pour exécuter une commande automatisée afin de déplacer automatiquement le ferry (30) de la première position à la seconde position après avoir défini la seconde position comme destination du ferry (30).

3. Système selon la revendication 2, dans lequel le dispositif de commande (12) est en outre configuré ou programmé pour:
déterminer si une condition prédéterminée est satisfaite après avoir déplacé le ferry (30) de la première position à la seconde position; et
définir la première position comme destination du ferry (30) sur la base des informations de première position et exécuter la commande automatisée pour déplacer automatiquement le ferry (30) vers la première position lorsqu'il est déterminé que la condition prédéterminée est satisfaite.

4. Système selon la revendication 3, dans lequel le dispositif de commande (12) est en outre configuré ou programmé pour déterminer que la condition prédéterminée est satisfaite lors de la réception d'une notification prédéterminée provenant d'un terminal de communication (15) utilisé par l'utilisateur.

5. Système selon la revendication 3, comprenant en outre:
une partie détection de position (41) configurée pour détecter les informations de position du ferry (30), dans lequel le dispositif de commande (12) est en outre configuré ou programmé pour:
déterminer si le ferry (30) est éloigné de la seconde position d'une distance prédéterminée ou plus sur la base d'un résultat de détection par la partie détection de position (41); et
déterminer que la condition prédéterminée est satisfaite lorsqu'il est déterminé que le ferry (30) est éloigné de la seconde position d'une distance prédéterminée ou supérieure.

6. Système selon la revendication 3, comprenant en outre:
une partie reconnaissance vocale(42) configurée pour reconnaître une parole prononcée par l'utilisateur, dans lequel
le dispositif de commande (12) est en outre configuré ou programmé pour déterminer si la condition prédéterminée est satisfaite sur la base d'un résultat de détection par la partie reconnaissance vocale(42).

7. Système selon la revendication 1, comprenant en outre :
une partie détection (47) configurée pour détecter le départ de l'embarcation (10) de la seconde position, dans lequel le dispositif de commande (12) est en outre configuré ou programmé pour définir la première position comme destination du ferry (30) sur la base des informations de première position et exécuter une commande automatisée pour déplacer automatiquement le ferry (30) vers la première position lorsqu'il détermine que l'embarcation (10) est éloignée de la seconde position sur la base d'un résultat de détection par la partie détection (47) alors que le ferry (30) se trouve dans la seconde position.

8. Système selon la revendication 7, comprenant en outre:
un élément d'amarrage (46) comprenant une bouée (46a) et un élément de connexion (46b), la bouée (46a) étant configurée pour amarrer l'embarcation (10), l'élément de connexion (46b) étant configuré pour connecter la bouée (46a) à l'embarcation (10) à travers celle-ci, dans lequel
la partie détection (47) est en outre configurée pour détecter la séparation de l'élément de connexion (46b) de l'embarcation (10), et
le dispositif de commande (12) est en outre configuré ou programmé pour déterminer que l'embarcation (10) est éloignée de la seconde position lorsque la partie détection (47) détecte la séparation de l'élément de connexion (46b) de l'embarcation (10).

9. Système selon l'une quelconque des revendications 1 à 8, comprenant en outre:
une caméra (51) configurée pour générer des données d'image en prenant une photo du ferry (30);
une partie détection de chute dans l'eau (52) configurée pour détecter la chute d'une personne à bord du ferry (30) dans l'eau sur la base des données d'image générées par la caméra (51); et
une partie information (53) configurée pour informer de manière externe d'une alerte lorsque la partie détection de chute dans l'eau (52) détecte la chute dans l'eau de la personne à bord du ferry (30).

10. Système selon la revendication 2, comprenant en outre:
une partie détection de position (41) configurée pour détecter les informations de position du ferry (30), dans lequel le dispositif de commande (12) est en outre configuré ou programmé pour:
déterminer si le ferry (30) a été déplacé de la première position à la seconde position sur la base d'un résultat de détection par la partie détection de position (41); et
commuter la commande automatisée en commande manuelle lorsqu'il détermine que le ferry (30) a été déplacé de la première position à la seconde position.

11. Système selon l'une quelconque des revendications 1 à 10, dans lequel les informations de seconde position comprennent des informations de position d'une bouée (46b) amarrant l'embarcation (10) de l'utilisateur.

12. Système selon l'une quelconque des revendications 1 à 11, comprenant en outre:
une partie détection d'obstacles (43), dans lequel
la partie stockage (13) est configurée pour stocker une pluralité d'itinéraires (R) entre la première position et la seconde position,
la partie détection d'obstacles (43) est configurée pour détecter un obstacle sur chacun des itinéraires (R) de la pluralité d'itinéraires, et
le dispositif de commande (12) est en outre configuré ou programmé pour sélectionner l'un des multiples itinéraires (R) sur la base d'un résultat de détection par la partie détection d'obstacles (43) lors de la réception des informations d'identification.

13. Système selon l'une quelconque des revendications 1 à 12, dans lequel le dispositif de commande (12) est en outre configuré ou programmé pour:
déterminer si un terminal de communication (15) utilisé par l'utilisateur se trouve dans la seconde position sur la base des informations de position du terminal de communication (15) lors de la réception des informations de position du terminal provenant du terminal de communication (15) ; et
définir la seconde position comme destination du ferry (30) sur la base des informations de seconde position et exécuter la commande automatisée pour déplacer automatiquement le ferry (30) de la première position à la seconde position lorsqu'il est déterminé que le terminal de communication (15) se trouve dans la seconde position.

14. Système selon la revendication 13, dans lequel le dispositif de commande (12) est en outre configuré ou programmé pour transmettre au terminal de communication (15) des informations concernant le temps nécessaire au ferry (30) pour arriver à la seconde position lorsqu'il détermine que le terminal de communication (15) se trouve à la seconde position sur la base des informations de position du terminal.

15. Système selon la revendication 13, dans lequel le dispositif de commande (12) est en outre configuré ou programmé pour transmettre au terminal de communication (15) des informations sur la position actuelle du ferry (30) et des informations sur la destination du ferry (30) lorsqu'il détermine que le terminal de communication (15) se trouve dans la seconde position sur la base des informations de position du terminal.

16. Système selon l'une quelconque des revendications 1 à 15, comprenant en outre:
une batterie (44) disposée sur le ferry (30); et
un dispositif de charge (45) capable d'alimenter en électricité la batterie (44) lorsque le ferry (30) se trouve dans la première position.

17. Procédé de commande d'un ferry (30) mis à flot dans une marina où l'embarcation (10) d'un utilisateur est amarrée et entreposée, le procédé comprenant les opérations suivantes:
stocker des informations d'identification de première position concernant une première position où le ferry (30) est amarré/désamarré, et d'informations de seconde position concernant une seconde position sur l'eau; et
permettre la conduite du ferry (30) et définir la seconde position comme destination du ferry (30);
**caractérisé en ce que**
le procédé comprend le stockage d'informations identifiant l'utilisateur ;
la seconde position correspond à une position dans laquelle l'embarcation (10) de l'utilisateur est amarrée et stockée ; et
la conduite du ferry (30) est autorisée et la seconde position est définie sur la base des informations relatives à la seconde position lorsque les informations d'identification sont reçues.

18. Procédé selon la revendication 17, comprenant en outre:
l'exécution d'une commande automatisée pour déplacer automatiquement le ferry (30) de la première position à la seconde position après avoir défini la seconde position comme destination du ferry (30).

19. Ferry (30) mis à flot dans une marina où l'embarcation (10) d'un utilisateur est amarrée et entreposée, le ferry (30) comprenant un système pour assurer sa commande selon la revendication 1.

20. Ferry (30) selon la revendication 19, dans lequel le dispositif de commande (12) est en outre configuré ou programmé pour exécuter une commande automatisée afin de déplacer automatiquement le ferry (30) de la première position à la seconde position après avoir défini la seconde position comme destination du ferry (30).
